# FASCICULE DE BREVET EUROPEEN

(11) **EP 0 863 664 B1**
(45) Date de publication et mention de la délivrance du brevet: **27.08.2003**
(21) Numéro de dépôt: 98410019.8
(22) Date de dépôt: 27.02.1998
(51) Int. Cl.: H04N 3/233

(54) **Circuit de correction de déviation horizontale pour téléviseur**
Horizontalablenkungskorrekturschaltung für Fernsehgerät
Horizontal deflection correction circuit for television set

(30) Priorité: 28.02.1997 FR 9702636
(43) Date de publication de la demande: 09.09.1998
(73) Titulaire: STMicroelectronics S.A., 92120 Montrouge (FR)
(72) Inventeur: Chaussy, Danika, 38220 Montchaboud (FR)
(74) Mandataire: de Beaumont, Michel

(56) Documents cités:
- EP-A- 0 194 817
- EP-A- 0 561 043
- EP-A- 0 675 641
- US-A- 4 972 127

## Description

La présente invention concerne le domaine des téléviseurs et, plus particulièrement, la correction de la déviation horizontale du faisceau d'électrons d'un tube cathodique pendant une trame d'images.

Dans un tube cathodique, l'image est obtenue par un balayage vertical (par exemple à une fréquence de l'ordre de 50 Hz) et un balayage horizontal (par exemple à une fréquence de l'ordre de 15,6 kHz) d'un faisceau d'électrons sur un écran de luminophores. L'écran n'étant pas sphérique mais plutôt plan, ces balayages nécessitent certaines corrections pour éviter une déformation des images.

La présente invention s'applique plus particulièrement à la correction dite "de coussin" ou "est/ouest" corrigeant les déformations des côtés gauche et droit de l'écran en modifiant le courant de balayage horizontal pendant une trame d'images.

La figure 1 représente très schématiquement un écran 1 sensiblement rectangulaire d'un tube cathodique. Cette figure illustre la déformation subie par une image 2 (surface hachurée à la figure 1) en l'absence de correction de coussin.

La correction de coussin s'obtient généralement en modulant le courant de balayage horizontal par un signal approximativement parabolique d'une durée correspondant sensiblement à la période d'une trame d'images.

La figure 2 représente, sous forme de schéma-bloc, un exemple classique de circuit de correction de coussin.

La correction de coussin s'obtient en modulant (MODUL. 3) le courant HB de balayage horizontal du tube cathodique 4 par un signal p approximativement parabolique. Ce signal p est obtenu par un multiplieur G_MULT. 5, dit "de Gilbert", dont le rôle est d'élever au carré (x²) une rampe de courant iᵣₐₘₚ, symétrique par rapport à la masse et à la fréquence des trames d'images, et fournie par un générateur RAMP 6.

Pour certains types de tubes cathodiques, et en particulier pour des tubes cathodiques dits à "grand angle" (par exemple, de l'ordre de 110°) pour lesquels l'écran est plus près du canon à électrons que dans un tube à angle restreint, la déformation des images s'effectue non seulement sur les bords droit et gauche, mais également aux coins de l'écran.

Pour ce type d'écran, on prévoit également une correction, dite "de coin", qui a pour objet de modifier les extrémités de la parabole p afin de les infléchir de façon plus ou moins importante.

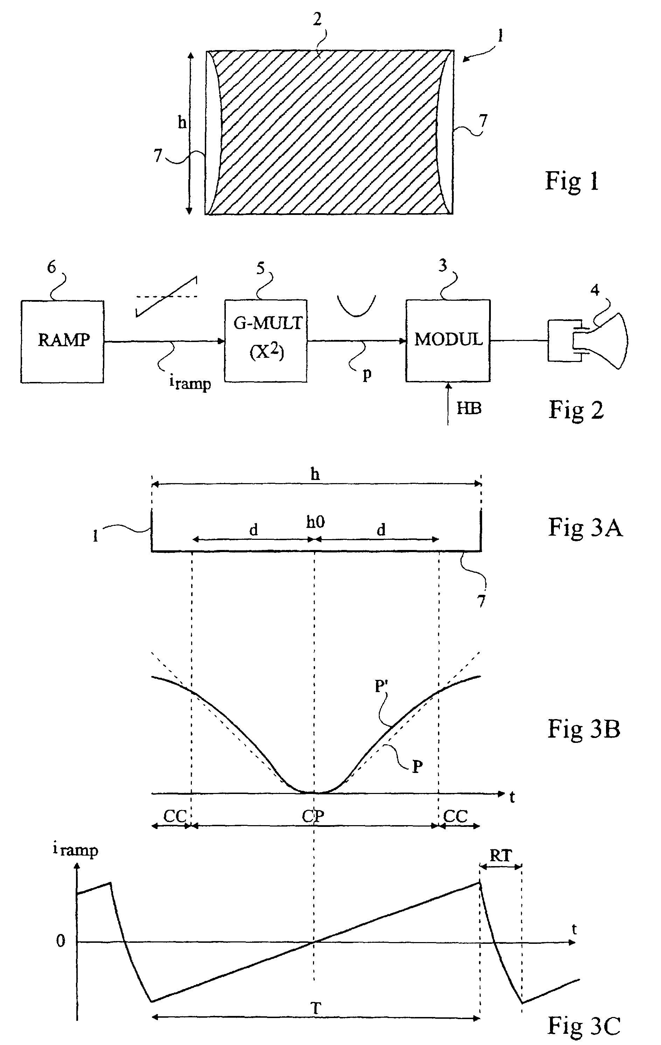

Les figures 3A à 3C illustrent le principe fonctionnel d'un système classique de correction de coin. La figure 3A représente partiellement l'écran 1 dans une orientation verticale. La figure 3B représente en pointillés l'allure du signal p de la figure 2 et, en traits pleins, l'allure d'un signal de correction p', obtenu en soustrayant au signal p, par exemple, un signal (non représenté) en sinx. La figure 3C représente l'allure du courant iᵣₐₘₚ pendant une période T de trame d'image. Comme l'illustre la figure 3C, on utilise l'intervalle RT de retour trame entre deux trames d'image pour provoquer la décroissance du courant iᵣₐₘₚ jusqu'à la rampe suivante.

Un inconvénient d'un système de correction de coin consistant à ajouter ou à soustraire à la parabole p en x², une fonction en sinx, en x⁴ ou autre, pour obtenir une parabole p' dont les extrémités ont une pente CC (figure 3B) plus faible que celle de la parabole p, est que la déformation apportée déforme également la partie centrale CP de la parabole.

Une difficulté de la correction de coin est qu'elle varie en fonction des tubes cathodiques et n'est pas, comme la correction de coussin, sensiblement définie par une fonction simple (x²) indépendante du tube concerné. Pour un type de tube donné, on connaît seulement les distances d de part et d'autre du centre h0 de l'écran dans la hauteur h à partir desquelles la pente des extrémités de la parabole p doit être plus faible, et l'amplitude de cette réduction de pente.

Le document EP-A-0561043 décrit un système de correction de coin dans lequel les extrémités de la parabole sont corrigées après l'élévation au carré d'une rampe linéaire d'obtention de cette parabole.

La présente invention vise à proposer un nouveau procédé et circuit de correction de déviation horizontale qui pallie aux inconvénients des systèmes classiques et qui résolve les problèmes exposés ci-dessus.

L'invention vise également à proposer un circuit dans lequel une modification des distances à partir desquelles la parabole doit être infléchie soit particulièrement simple et ne nécessite aucune modification du schéma du circuit.

L'invention vise également à proposer un circuit d'encombrement minimum.

L'invention vise en outre à rendre paramétrable la forme de la correction de coin.

Pour atteindre ces objets, la présente invention prévoit un procédé de correction du courant de balayage horizontal d'un tube cathodique à partir d'une modulation de ce courant de balayage par un signal sensiblement parabolique à la fréquence des trames d'images, obtenu par une élévation au carré d'une rampe de courant, consistant à infléchir les extrémités de cette rampe de courant avant son élévation au carré.

Selon un mode de réalisation de la présente invention, ce procédé consiste à obtenir une rampe de courant corrigée en ajoutant ou en soustrayant à une rampe de courant linéaire de même fréquence que la fréquence des trames d'images, un signal de correction de coin, de même fréquence que la fréquence des trames d'images et présentant une valeur nulle dans une portion centrale de la rampe de courant linéaire.

Selon un mode de réalisation de la présente invention, le signal de correction de coin présente, à valeur faible, au début et à la fin de chaque période, une forme exponentielle amortie.

Selon un mode de réalisation de la présente invention, le signal de correction de coin est obtenu à partir de ladite rampe de courant linéaire.

La présente invention prévoit aussi un circuit de correction d'un courant de balayage horizontal d'un tube cathodique, du type comportant un modulateur du courant de balayage horizontal par un signal de forme sensiblement parabolique obtenu au moyen d'un multiplieur élevant au carré une rampe de courant à la fréquence des trames d'images, comportant aussi des moyens pour infléchir les extrémités de ladite rampe de courant, obtenue à partir d'un générateur d'une rampe linéaire et symétrique par rapport à la masse.

Selon un mode de réalisation de la présente invention, lesdits moyens comportent un redresseur de la rampe de courant linéaire pour délivrer un signal en dents de scie référencé par rapport à la masse ; un circuit de transition pour annuler le signal en dents de scie dans une portion centrale de la période, le circuit de transition délivrant un signal de correction de coin ; et un sommateur pour ajouter ou soustraire à la rampe de courant linéaire, le signal de correction de coin.

Selon un mode de réalisation de la présente invention, un circuit de réglage de l'amplitude du signal de correction de coin est intercalé entre une sortie du circuit de transition et une entrée du sommateur.

Selon un mode de réalisation de la présente invention, le moyen de réglage d'amplitude de la correction de coin est constitué d'un réseau R/2R.

Selon un mode de réalisation de la présente invention, le circuit de transition est constitué de deux transistors bipolaires montés en miroirs de courant, un premier transistor étant monté en diode et recevant, sur son collecteur, le courant en dents de scie, un second transistor délivrant, sur son collecteur, le courant de correction de coin et recevant, sur son émetteur, un courant constant, les émetteurs respectifs des deux transistors étant reliés à la masse par l'intermédiaire de deux résistances de même valeur. Selon un mode de réalisation de la présente invention, ce courant constant est ajustable.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 décrites précédemment sont destinées à exposer l'état de la technique et le problème posé ;

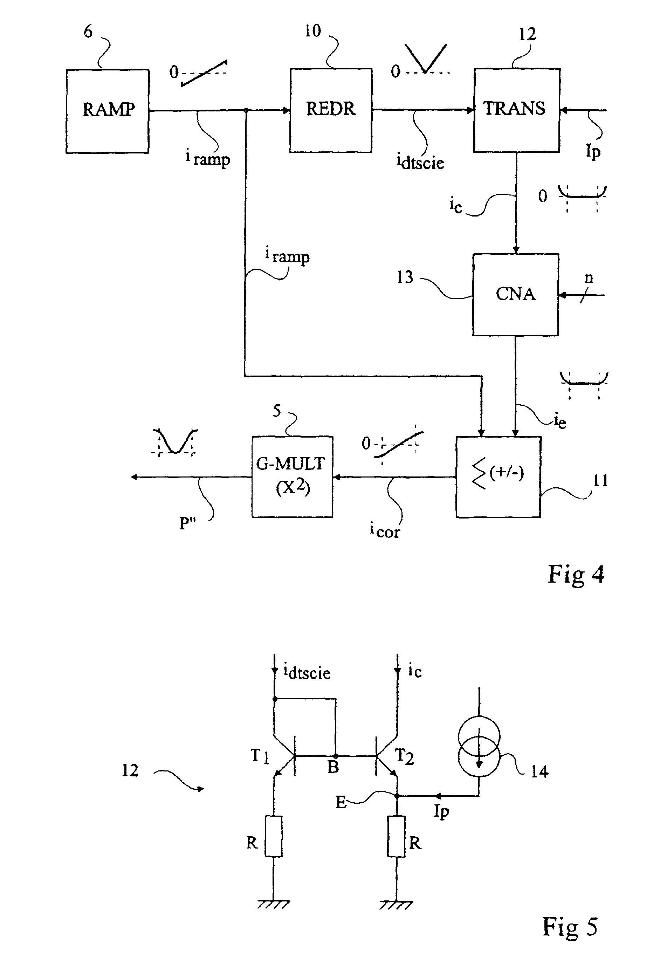

la figure 4 représente, sous forme de schéma-bloc, un mode de réalisation d'un circuit de correction du courant de balayage horizontal d'un tube cathodique selon la présente invention ;
la figure 5 représente un mode de réalisation d'un bloc de transition du circuit représenté à la figure 4 ; et

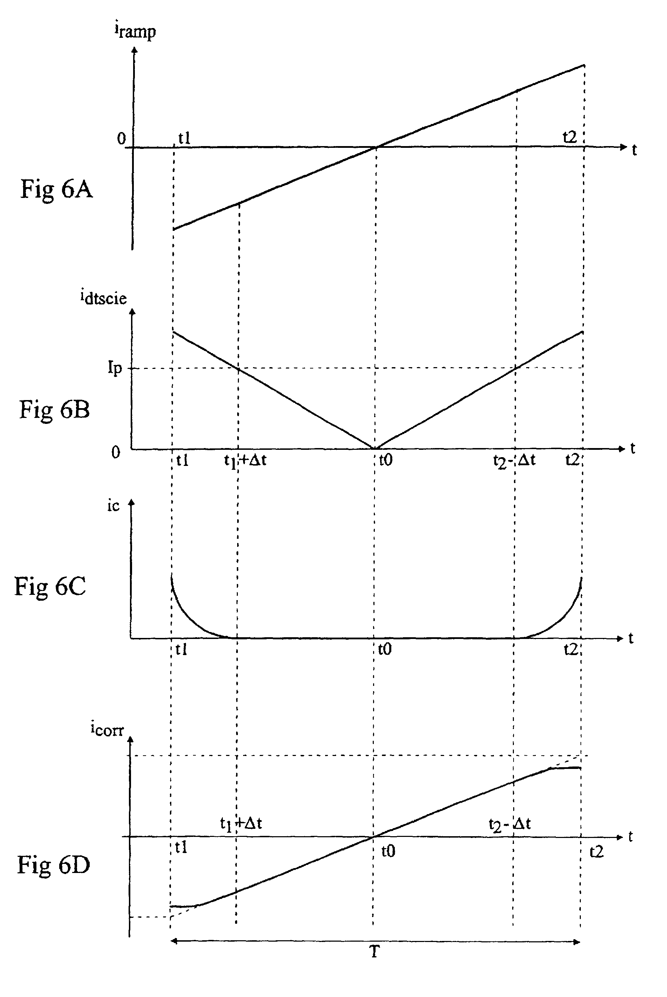

les figures 6A à 6D illustrent, sous forme de chronogrammes, le fonctionnement d'un circuit tel que représenté à La figure 4.

Les mêmes éléments ont été représentés par les mêmes références aux différentes figures. Pour des raisons de clarté, les chronogrammes des figures 3 et 6 ne sont pas à l'échelle et seuls les éléments nécessaires à la compréhension de l'invention ont été décrits aux figures.

Une caractéristique de la présente invention est de modifier la rampe de courant servant à obtenir le signal de correction du courant de balayage horizontal, avant que cette rampe soit élevée au carré pour lui conférer une forme parabolique.

La figure 4 représente un mode de réalisation d'un circuit de correction selon l'invention.

Comme précédemment, ce circuit comporte un générateur 6 d'une rampe de courant iᵣₐₘₚ à une fréquence correspondant à la fréquence de trame du tube cathodique. Le circuit comporte également, de façon classique, un multiplieur de Gilbert 5 dont le rôle est de délivrer un signal p" approximativement parabolique de modulation du courant de balayage horizontal du tube cathodique. Le modulateur et le tube cathodique n'ont pas été représentés à la figure 4 pour des raisons de clarté.

Selon l'invention, le multiplieur 5 reçoit un signal i_{cor} ayant la forme d'une rampe de courant à la fréquence des trames d'image et dont la pente est corrigée aux extrémités.

Le signal iᵣₐₘₚ délivré par le générateur 6 est, selon l'invention, envoyé sur un circuit 10 de redressement (REDR.) qui délivre un signal en dents de scie i_{dtscie} référencé à la masse et symétrique par rapport au milieu de la période.

Selon l'invention, le signal i_{cor} est obtenu en ajoutant ou en soustrayant, au signal iᵣₐₘₚ, un signal iₑ de correction de coin, dont la fréquence correspond à la fréquence trame et qui a, en début et en fin de période, une valeur non-nulle et, dans la partie intermédiaire de la période, une valeur nulle. Ce signal de correction de coin iₑ est obtenu à partir du signal i_{dtscie} et est envoyé sur une première entrée d'un sommateur 11 dont une seconde entrée reçoit le signal iᵣₐₘₚ. Le sommateur 11 délivre le signal i_{cor}.

Dans le mode de réalisation représenté, on suppose que le sommateur 11 est pourvu de moyens pour choisir entre une addition ou une soustraction du signal iₑ au signal iᵣₐₘₚ selon que l'on est en début ou en fin de période. On pourra, toutefois, prévoir que le signal iₑ soit positif en début de période et négatif en fin de période, et que le sommateur 11 ne réalise qu'une addition des signaux iₑ et iᵣₐₘₚ.

Une première solution pour obtenir le signal iₑ à partir du signal i_{dtscie} consisterait à utiliser un système de commutation pour conserver, en leur affectant un coefficient de proportionnalité inférieur à 1, uniquement les extrémités d'amplitude maximale du signal i_{dtscie}. Toutefois, une telle solution provoquerait une cassure aux points de changement de pente dans le signal i_{cor}. Ces cassures se retrouveraient dans le signal parabolique p" et se verraient à l'écran.

On veillera donc, selon l'invention, à ce que le changement de pente du signal i_{cor} s'effectue de façon douce, c'est-à-dire sans cassure.

Pour ce faire et selon le mode de réalisation représenté à la figure 4, le signal i_{dtscie} est envoyé sur un circuit 12 de transition (TRANS.) dont le rôle est de délivrer un signal i_{c} référencé à la masse et de même fréquence que la fréquence des trames d'images. Ce signal i_{c} est nul dans toute la partie centrale (CP, figure 3C) de la rampe de courant, et est positif et de forme sensiblement exponentielle au début et à la fin (CC, figure 3C) de chaque trame d'image. Le circuit 12 reçoit un courant constant Ip dont le rôle est de décaler la référence du signal i_{dtscie}. Un mode de réalisation particulier du circuit 12 sera décrit par la suite en relation avec la figure 5.

Le cas échéant, le signal i_{c} est envoyé à un circuit 13 qui délivre le signal de correction de coin iₑ. Le rôle du circuit 13 est de modifier l'amplitude du signal i_{c}. Le courant i_{c} constitue, par exemple, le courant de pied d'un réseau R/2R formant un convertisseur analogique commandé, par exemple, par n bits.

Qu'il s'agisse du signal i_{c} ou du signal iₑ, on veillera à ce que ces signaux soient référencés à la masse et nuls dans la partie centrale des trames.

La figure 5 représente un mode de réalisation particulièrement simple d'un bloc 12 de transition destiné à générer le signal i_{c} à partir du signal i_{dtscie}. Le circuit 12 est constitué de deux transistors bipolaires T1 et T2 montés en miroirs de courant et dont les émetteurs respectifs sont reliés à la masse par l'intermédiaire de deux résistances R de même valeur. Le collecteur du transistor T1 reçoit le courant i_{dtscie} et est relié à sa base. Le collecteur du transistor T2 délivre le courant i_{c} et son émetteur reçoit le courant Ip fourni par une source de courant constant 14.

Le fonctionnement du circuit 12 représenté à la figure 5 sera exposé en relation avec les figures 6A à 6B qui illustrent le fonctionnement d'un circuit de correction tel que représenté à la figure 4.

Les figures 6A à 6D représentent, respectivement, un exemple d'allures des signaux iᵣₐₘₚ, i_{dtscie}, i_{c} et i_{cor} pendant une période T correspondant à la durée d'une trame d'image.

On a désigné par t1 l'instant de début d'une période T et par t2 l'instant de fin de cette période.

Selon l'invention, le courant Ip est ajustable en fonction de la distance d (figure 3A) à partir de laquelle doit intervenir la correction de coin par rapport à la hauteur médiane h0 de l'écran, donc en fonction du tube cathodique. Ce réglage est, par exemple, fonction d'un rapport résistif. Ainsi, le schéma du circuit selon l'invention n'a pas besoin d'être modifié d'une série ou d'un type de tubes à un autre. Il suffit de modifier les valeurs de résistances fixant le courant Ip pour modifier le seuil à partir duquel intervient la correction de coin. D'un point de vue temporel, la position h0 correspond à un instant t0 du milieu de la période T et la distance d de part et d'autre de la position h0 correspond à des instants t1 + Δt et t2 - Δt d'une période T.

Le courant i_{c} (figure 6C) est obtenu à partir d'un circuit tel que représenté à la figure 5.

Entre les instants t1 + Δt et t2 - Δt, le transistor T2 est bloqué, le courant i_{dtscie} étant inférieur au courant Ip. Le courant i_{c} est alors nul. Le potentiel de l'émetteur (point E) du transistor T2 est constant. Par contre, le potentiel de la base (point B) du transistor T1 évolue linéairement avec le courant I_{dtscie} et est égal à la chute de tension base-émetteur (Vbe) du transistor T1 majorée de la chute de tension dans la résistance R (correspondant sensiblement au produit de la valeur de cette résistance R par le courant i_{dtscie}).

Entre les instants tl et t1 + Δt et entre les instants t2 - Δt et t2, le transistor T2 conduit. Toutefois, la variation du courant i_{c}, pour de faibles valeurs de ce courant, présente une forme exponentielle avec l'augmentation du potentiel de la base du transistor T2 (point B). On voit ici apparaître un deuxième rôle du courant Ip qui est d'amortir la croissance exponentielle du courant i_{c} à la mise en conduction du transistor T2 (ou sa décroissance, lors de son blocage).

La forme exponentielle du courant i_{c} dépend du rapport de surface entre les transistors T1 et T2 et de la valeur des résistances R. A pente du courant I_{dtscie} donnée et pour un rapport de surface donné, la pente du signal i_{c} (liée à l'augmentation du potentiel du point E donc à la pente du courant I_{dtscie}) est directement proportionnelle à la valeur des résistances R. De même, pour une valeur donnée des résistances R, la pente du courant i_{c} est directement proportionnelle au rapport de surface entre les transistors T1 et T2. On veillera donc à dimensionner les résistances R et les transistors T1 et T2 de façon adéquate pour éviter l'apparition d'un point de cassure.

Le signal iₑ (figure 4) n'a pas été représenté aux figures 6 car il a sensiblement la même forme que le signal i_{c}, le réseau R/2R 13 ne modifiant que son amplitude.

La figure 6D illustre la forme du courant i_{cor} obtenu en sortie du sommateur 11. La pente du courant i_{cor} correspond à la pente du signal iᵣₐₘₚ entre les instants t1 + Δt et t2 - Δt, et cette pente est amortie (plus faible) entre les instants t1 et t1 + Δt et entre les instants t2 - Δt et t2.

Ainsi, en élevant au carré le signal i_{cor} au moyen du multiplieur de Gilbert (5, figure 4), on obtient un signal p" de forme sensiblement parabolique dont les extrémités sont amorties.

Un avantage de la présente invention est qu'il n'est pas nécessaire de modifier la structure du schéma du circuit de correction d'une série ou d'un type de tubes cathodiques à un autre.

Un autre avantage de la présente invention est que l'amplitude de la correction de coin est paramétrable sans nécessiter d'intervention sur le circuit.

Un autre avantage de la présente invention est qu'en infléchissant les extrémités de la rampe linéaire iᵣₐₘₚ avant son élévation au carré permettant d'obtenir la parabole p", un seul multiplieur 5 est nécessaire. Ainsi, par rapport au document EP-A-0561043, l'invention économise un multiplieur qui constitue l'un des éléments les plus encombrants d'un circuit de correction.

La réalisation pratique du circuit de correction selon l'invention est à la portée de l'homme de l'art. En particulier, la réalisation du générateur de rampe, du redresseur fournissant le courant en dents de scie, du convertisseur numérique-analogique à base d'un réseau R/2R, du sommateur et du multiplieur de Gilbert sont à la portée de l'homme du métier de même que leur adaptation à la fréquence des trames et aux amplitudes des signaux du circuit de commande du tube cathodique.

Bien entendu, la présente invention est susceptible de diverses variantes et modifications qui apparaîtront à l'homme de l'art. En particulier, bien que l'ajustement du courant Ip ait été décrit comme étant fonction d'un rapport résistif, le courant Ip pourra être rendu variable, par exemple, au moyen d'un convertisseur numérique/analogique.

## Revendications

1. Procédé de correction du courant de balayage horizontal (HB) d'un tube cathodique (4) à partir d'une modulation de ce courant de balayage par un signal (p") sensiblement parabolique à la fréquence des trames d'images, obtenu par une élévation au carré d'une rampe de courant (i_{cor}), **caractérisé en ce qu'**il consiste à infléchir seulement les extrémités de cette rampe de courant avant son élévation au carré.

2. Procédé selon la revendication 1, **caractérisé en ce qu'**il consiste à obtenir une rampe de courant corrigée (i_{cor}) en ajoutant ou en soustrayant à une rampe de courant linéaire (iᵣₐₘₚ) de même fréquence que la fréquence des trames d'images, un signal (iₑ) de correction de coin, de même fréquence que la fréquence des trames d'images et présentant une valeur nulle dans une portion centrale (CP) de la rampe de courant linéaire.

3. Procédé selon la revendication 2, **caractérisé en ce que** le signal de correction de coin (iₑ) présente, à valeur faible, au début et à la fin de chaque période (T), une forme exponentielle amortie.

4. Procédé selon la revendication 2 ou 3, **caractérisé en ce que** le signal de correction de coin (iₑ) est obtenu à partir de ladite rampe de courant linéaire (iᵣₐₘₚ).

5. Circuit de correction d'un courant de balayage horizontal (HB) d'un tube cathodique (4), du type comportant :
un modulateur (3) du courant de balayage horizontal par un signal (p") de forme sensiblement parabolique obtenu au moyen d'un multiplieur (5) élevant au carré une rampe de courant (i_{cor}) à la fréquence des trames d'images, **caractérisé en ce qu'**il comporte des moyens (10, 11, 12, 13) pour infléchir seulement les extrémités de ladite rampe de courant, obtenue à partir d'un générateur (6) d'une rampe (iᵣₐₘₚ) linéaire et symétrique par rapport à la masse.

6. Circuit selon la revendication 5, **caractérisé en ce que** lesdits moyens comportent :
un redresseur (10) de la rampe de courant linéaire (iᵣₐₘₚ) pour délivrer un signal (i_{dtscie}) en dents de scie référencé par rapport à la masse ; un circuit de transition (12) pour annuler le signal en dents de scie dans une portion centrale (CP) de la période (T), le circuit de transition (12) délivrant un signal (i_{c}, iₑ) de correction de coin ; et
un sommateur (11) pour ajouter ou soustraire à la rampe de courant (iᵣₐₘₚ) linéaire, le signal de correction de coin.

7. Circuit selon la revendication 6, **caractérisé en ce qu'**un circuit (13) de réglage de l'amplitude du signal de correction de coin est intercalé entre une sortie du circuit de transition (12) et une entrée du sommateur (11).

8. Circuit selon la revendication 7, **caractérisé en ce que** le moyen (13) de réglage d'amplitude de la correction de coin est constitué d'un réseau R/2R.

9. Circuit selon l'une quelconque des revendications 6 à 8, **caractérisé en ce que** le circuit de transition (12) est constitué de deux transistors bipolaires (T1, T2) montés en miroirs de courant, un premier transistor (T1) étant monté en diode et recevant, sur son collecteur, le courant en dents de scie (i_{dtscie}), un second transistor (T2) délivrant, sur son collecteur, le courant (i_{c}) de correction de coin et recevant, sur son émetteur (E), un courant constant (Ip), les émetteurs respectifs des deux transistors étant reliés à la masse par l'intermédiaire de deux résistances (R) de même valeur.

10. Circuit selon la revendication 9, **caractérisé en ce que** ledit courant constant (Ip) est ajustable.

## Patentansprüche

1. Verfahren zur Korrektur des horizontalen Scan-Stroms (HB) einer Kathodenstrahlröhre (4) aus einer Modulation des Scan-Stroms durch ein im wesentlichen parabolisches Signal (p") bei einer Bildrahmenfrequenz, und zwar erhalten durch Quadrieren einer Stromrampe (i_{cor}), **dadurch gekennzeichnet, dass** das Verfahren besteht aus dem Eindrehen bzw. Ablenken von nur den Enden der Stromrampe vor deren Quadrieren.

2. Verfahren gemäß Anspruch 1, **dadurch gekennzeichnet, dass** das Verfahren besteht aus dem Erhalten einer korrigierten Stromrampe (i_{cor}) durch Hinzufügen oder Abziehen eines Eckenkorrektursignals (iₑ) mit der gleichen Frequenz wie die Bildrahmenfrequenz zu der bzw. von der linearen Stromrampe (iᵣₐₘₚ) mit derselben Frequenz wie die Bildrahmenfrequenz, wobei das Eckenkorrektursignal in einem Mittelteil (CP) der linearen Stromrampe einen Nullwert besitzt.

3. Verfahren gemäß Anspruch 2, **dadurch gekennzeichnet, dass** das Eckenkorrektursignal (iₑ) auf einem niedrigen Wert am Anfang und am Ende jeder Periode (T) eine gedämpfte Exponentialform besitzt.

4. Verfahren gemäß Anspruch 2 oder 3, **dadurch gekennzeichnet, dass** das Eckenkorrektursignal (iₑ) aus der linearen Stromrampe (iᵣₐₘₚ) erhalten wird.

5. Schaltung zur Korrektur des horizontalen Scan-Stroms (HB) einer Kathodenstrahlröhre (4), wobei die Schaltung folgendes aufweist:
einen Modulierer (3) des horizontalen Scan-Stroms durch ein im wesentlichen parabolisches Signal (p"), welches erhalten wird anhand eines Multiplizierers (5), der eine Stromrampe (i_{cor}) bei der Frequenz der Bildrahmen quadriert, **dadurch gekennzeichnet, dass** die Schaltung ferner Mittel (10, 11, 12, 13) zum Eindrehen bzw. Ablenken von nur den Enden der Stromrampe umfasst, welche von einem Generator (6) der linearen Rampe (iᵣₐₘₚ) erhalten wird, die bezüglich Masse bzw. Erde symmetrisch ist.

6. Schaltung gemäß Anspruch 5, **dadurch gekennzeichnet, dass** die Mittel folgendes aufweisen:
einen Gleichrichter (10) der linearen Stromrampe (iᵣₐₘₚ) zum Liefern eines Sägezahn-förmigen Signals (i_{dtscie}) bezogen auf die Masse bzw. Erde auszugeben;
eine Übergangsschaltung (12) zum Löschen des Sägezahn-förmigen Signals in einem Mittelteil (CP) der Periode (T), wobei die Übergangsschaltung (12) ein Eckenkorrektursignal (i_{c}, iₑ) ausgibt; und
einen Addierer (11) zum Addieren oder Abziehen des Eckenkorrektursignals zu der bzw. von der linearen Stromrampe (iᵣₐₘₚ).

7. Schaltung gemäß Anspruch 6,**dadurch gekennzeichnet, dass** eine Schaltung (13) zum Einstellen der Amplitude des Eckenkorrektursignals zwischen einen Ausgang der Übergangsschaltung (12) und einen Eingang des Addierers (11) geschaltet ist.

8. Schaltung gemäß Anspruch 7,**dadurch gekennzeichnet, dass** die Mittel (13) zum Einstellen der Amplitude des Eckenkorrektursignals gebildet sind durch ein R/2R-Netzwerk.

9. Schaltung gemäß einem der Ansprüche 6 bis 8, **dadurch gekennzeichnet, dass** die Übergangsschaltung (12) gebildet ist durch zwei bipolare Transistoren (T1, T2), die als Stromspiegel angeordnet sind, wobei ein erster Transistor (T1) Dioden-geschaltet ist und an seinem Kollektor den Sägezahn-förmigen Strom (i_{dtscie}) empfängt, wobei ein zweiter Transistor (T2) an seinem Kollektor den Eckenkorrekturstrom (i_{c}) ausgibt und an seinem Emitter (E) einen konstanten Strom (Ip) empfängt, wobei die jeweiligen Emitter beider Transistoren über zwei Widerstände (R) mit gleichen Wert mit Masse bzw. Erde verbunden sind.

10. Schaltung gemäß Anspruch 9,**dadurch gekennzeichnet, dass** der konstante Strom (Ip) einstellbar ist.

## Claims

1. A method of correction of the horizontal scanning current (HB) of a cathode-ray tube (4) from a modulation of the scanning current by a substantially parabolic signal (p'') at an image frame frequency, obtained by a squaring of a current ramp (i_{cor}), **characterized in that** only the ends of the current ramp are inflected before squaring.

2. The method of claim 1, **characterized in that** it consists in obtaining a corrected current ramp (i_{cor}) by adding or subtracting to a linear current ramp (iᵣₐₘₚ) of same frequency as the image frame frequency, a comer correction signal (iₑ), of same frequency as the image frame frequency and exhibiting a zero value in a central portion (CP) of the linear current ramp.

3. The method of claim 2, **characterized in that** the corner correction signal (iₑ) exhibits, at low value, at the beginning and at the end of each period (T), a damped exponential shape.

4. The method of claim 2 or 3, **characterized in that** the corner correction signal (iₑ) is obtained from the linear current ramp (iᵣₐₘₚ).

5. A circuit for correcting a horizontal scanning current (HB) of a cathode-ray tube (4), of the type including a modulator (3) of the horizontal scanning current with a signal (p'') of substantially parabolic shape obtained by means of a multiplier (5) squaring a current ramp (i_{cor}) at the frequency of the images frames, **characterized in that** it further includes means (10, 11, 12, 13) for inflecting only the ends of the current ramp, obtained from a generator (6) of a linear ramp (iᵣₐₘₚ), which is symmetrical with respect to the ground.

6. The circuit of claim 5, **characterized in that** said means include:
a rectifier (10) of the linear current ramp (iᵣₐₘₚ) to issue a sawtooth-shaped signal (i_{dtscie}) referenced with respect to the ground;
a transition circuit (12) for canceling the sawtooth-shaped signal in a central portion (CP) of the period (T), the transition circuit (12) issuing a corner correction signal (i_{c}, iₑ); and
an adder (11) for adding or subtracting to the linear current ramp (iᵣₐₘₚ) the corner correction circuit.

7. The circuit of claim 6, **characterized in that** a circuit (13) for setting of the amplitude of the corner correction signal is interposed between an output of the transition circuit (12) and an input of the adder (11).

8. The circuit of claim 7, **characterized in that** the means (13) for amplitude setting of the corner correction is formed of an R/2R network.

9. The circuit of any of claims 6 to 8, **characterized in that** the transition circuit (12) includes two bipolar transistors (T1, T2) mounted as current mirrors, a first transistor (T1) being diode-mounted and receiving, on its collector, the sawtooth-shaped current (i_{dtscie}), a second transistor (T2) issuing, on its collector, the corner correction current (i_{c}) and receiving, on its emitter (E), a constant current (Ip), the respective emitters of both transistors being grounded via two resistors (R) of same value.

10. The circuit of claim 9, **characterized in that** the constant current (Ip) is adjustable.
